# EUROPEAN PATENT APPLICATION

(11) **EP 4 446 451 A1**
(43) Date of publication of application: **16.10.2024**
(21) Application number: 23742688.7
(22) Date of filing: 04.01.2023
(51) Int. Cl.: C22C 38/02, C22C 38/04, C22C 38/06, C22C 38/22, C22C 38/34, C22C 38/38, C23C 22/76, C23C 22/78, C23C 22/82

(54) **STRIP STEEL AND MANUFACTURING METHOD THEREFOR**

(30) Priority: 19.01.2022 CN 202210059028
(71) Applicant: BAOSHAN IRON & STEEL CO., LTD., Shanghai 201900 (CN)
(72) Inventor: ZHAO, Yanliang, Shanghai 201900 (CN); WEI, Xing, Shanghai 201900 (CN); DAI, Yigang, Shanghai 201900 (CN)
(74) Representative: FARAGO Patentanwälte GmbH
(86) International application number: PCT/CN2023/070391
(87) International publication number: WO 2023/138372

(57) **Abstract**

A steel strip having excellent workability and corrosion resistance that requires no oil coating, and a manufacturing method therefor. The steel strip comprises a substrate and a phosphatization layer and a stearate lubricant layer provided on the substrate. The upper surface of the steel strip sequentially comprises, from inside to outside, the phosphatization layer and the stearate lubricant layer, with a surface roughness Rₐ in the range of 0.6 to 1.8 µm and R_{z} in the range of 6 to 16 µm, providing good surface lubricity during extension process. The lower surface of the steel strip has the stearate lubricant layer with a surface roughness Rₐ of 0.3 µm or less and R_{z} of 2 µm or less, offering good lubricity and high surface cleanliness. By using the steel strip designed with differentiated functionality on two surfaces according to the present invention can be directly stamped to process high-precision and large-deformation shell parts, eliminating the traditional processes of coating, oiling, and cleaning after forming required for manufacturing the high-precision and large-deformation shell parts from conventional steel plates, significantly improving the efficiency of parts manufacturing. Additionally, the steel strip has good rust resistance and corrosion resistance, and the surfaces thereof require no oil-coating treatment during storage and transportation.

## Description

### TECHNICAL FIELD

The present invention relates to the field of metal material processing, in particular to a steel strip having excellent processability and corrosion resistance that requires no oil coating, and a manufacturing method therefor.

### BACKGROUND ART

In the field of metal material processing, the continuous and efficient processing technology characterized by high precision, high complexity, and environmental protection requirements is widely used in the processing of automobiles and mechanical parts. According to theoretical analysis, extensive of laboratory scientific research, and application practice surveys, it is found that during the stamping process of shell parts having high precision and large deformation, the surface of the steel plate being in contact with the female die (matrix) withstands the main deformation friction force; whereas the surface of the steel plate being in contact with the male die (punch) withstands a relatively small deformation friction force to mainly ensure the dimensional accuracy of the inner surface. Therefore, the surface of the steel plate being in contact with the female die needs to provide sufficient lubrication during the deformation process. On the contrary, the surface of the steel plate being in contact with the male die does not require high lubricating performance, but does require a super high surface cleanliness. In order to obtain shell parts having high dimensional accuracy/high surface quality, it is required that the two surfaces have different lubricating functions.

Material suppliers such as JFE, Nippon Steel, and POSCO mainly focus on the development of products having excellent mechanical properties. In the field of development research of the stamping materials, a main focus on double-sided coating treatment of the steel strips (for example, coating with lubricating layers), as described in Japanese Patent JP05076347B2, Japanese Patent JP8295985A, and Korean Patent KR376927B1.

Regarding double-sided coating treatment of steel strip surfaces, the main process types include: (1) in a continuous manufacturing process, forming micron or sub-micron organic coatings on the surface of the steel plate by roll coating and baking curing, as described in Chinese Patent CN104451638, CN103289569, and CN105463436; (2) in a continuous manufacturing process, forming phosphatization layer/passivation layers on the surface of the steel plate by spraying, as described in Chinese Patent CN111349867A.

Chinese Patent CN103289569 discloses "a self-lubricating passivation solution and a hot dip galvanized self-lubricating steel plate coated with the same", primarily using the addition of nano-MoS₂ and the modified nanopolytetrafluoroethylene particles in a treatment agent to achieve solid lubrication in the coating. A lubrication coating having an adhering amount of 800 to 1200 mg/m² is formed on the surface of the steel plate by roll coating and baking curing. The product of the invention is mainly suitable for stamping requirements of home appliances and micromotor shell materials, but does not meet large deformation stamping requirement of high-precision components in the automotive and mechanical fields, and is not suitable for surface treatment of ordinary cold-rolled plates.

Chinese patent CN111349867 discloses "a coating-friendly pre-phosphating electro-galvanized automotive outer panel and a preparation method thereof". In the invention, a Nb-containing ultra-low carbon steel plate is designed. After a continuous plating layer is formed on the surface of the steel plate by gravity electroplating, a pre-phosphatization layer of 1.0 to 2.0 g/m² is formed by double-sided spraying at a phosphating temperature of 50 to 60°C, and is subjected to oil coating treatment to obtain a product that meets the stamping lubrication and corrosion resistance requirements of automotive body materials. The obtained product can be well applied on an automotive body production line, but cannot meet large deformation stamping requirement of high-precision components in the automotive and mechanical fields, and cannot realize manufacturing requirements for the double-sided differential lubrication function.

Chinese patent application CN105018920A discloses "a phosphatingsaponification production process", involving a drum type continuous phosphating/saponification process for processing small parts. The process mainly includes the following processes: entering the drum → degreasing → first rinsing → phosphating → second rinsing --*surface conditioning → saponification → exiting the drum, wherein the phosphating temperature is 60 to 85°C, the dipping time is 3 to 10 minutes, the saponification temperature is 55 to 80°C, and the dipping time is 0.5 to 5 minutes. This process implements the surface lubrication function of finished parts through high temperature phosphating treatment and saponification treatment, but it is not suitable for continuous manufacturing of steel strips.

Chinese Patent application CN105296997A discloses "a phosphatingsaponification treatment process for 27SiMn steel", providing a surface lubrication treatment method suitable for high-precision cold-drawn steel tubes, comprising: pickling → high temperature phosphating (70 °C) → saponification treatment for 27SiMn steel parts. Similarly, this application employs a double-sided nondifferentiated treatment, and is not suitable for continuous manufacturing of steel strips.

It can be seen from the above that shell parts having high precision and large deformation are required to have different lubrication functions on two surfaces of the material. Traditional processes achieve differential lubrication of steel plates by applying films (plastic lubrication films) or lubricating oil to the surface in contact with the male die during stamping. However, this approach does not meet the requirements for high efficiency and environmental protection. Current technologies mainly focus on lubrication devices, lubricating oil application methods, and fine stamping lubricant compositions for stamping processes. With the increasing demand for high-precision large-deformation shell parts, simplifying the processing and production processes to produce more cost-effective and competitive products will become an industry requirement. Therefore, it is necessary to provide a steel strip having excellent performances (such as workability and corrosion resistance), high efficiency and environmental friendliness (for example, oil-coating-free), and a production method therefor.

### SUMMARY OF THE INVENTION

An object of the present invention is to provide an oil-coating-free steel strip having excellent processability and corrosion resistance, and a manufacturing method therefor. The two surfaces of the steel strip in the thickness direction have differentiated functions: the upper surface (i.e., the surface having a phosphatization layer and a stearate lubricant layer) has a surface roughness Rₐ of 0.6 to 1.8 µm and a surface roughness R_{z} of 6 to 16 µm, providing good surface lubricity during extension process; the lower surface (i.e., the surface having a stearate lubricant layer only) has a surface roughness Rₐ of 0.3 µm or less and a surface roughness R_{z} of 2 µm or less, offering good lubricity and high surface cleanliness. Therefor, the steel strip provided by the present invention can meet the requirements of the continuous high-efficiency stamping process for high-precision, large-deformation shell parts, eliminating the need for coating, oiling, and cleaning after the forming during a stamping process of manufacturing the shell parts having high precision and large deformation by using the traditional steel plate. The obtained parts can be directly packaged and delivered, so that the efficiency of parts manufacturing can be greatly improved. Moreover, the steel strip has good rust resistance and corrosion resistance, and the obtained parts require no a rust preventive oil coating during storage and transportation.

In one aspect, the present invention provides a steel strip, wherein the steel strip comprises a substrate and a phosphatization layer and a stearate lubricant layer disposed on the substrate; and in the thickness direction of the substrate, the phosphatization layer and the stearate lubricant layer are sequentially arranged on the upper surface of the substrate from inside to outside, and the stearate lubricant layer is arranged on the lower surface of the substrate; and the upper surface of the steel strip has a surface roughness Rₐ of 0.6 to 1.8 µm and a surface roughness R_{z} of 6 to 16 µm; and the lower surface of the steel strip has a surface roughness Rₐ of 0.3 µm or less and a surface roughness R_{z} of 2 µm or less.

Preferably, in addition to Fe and inevitable impurities, the substrate contains the following chemical elements in wt %: C: 0.1-0.7%, 0.2% ≤ Si ≤ 2%, 0.2% ≤ Mn ≤ 2%, Cr : 0.2-1.4%, 0.01% ≤ Al ≤ 0.06%, and Mo: 0.05-0.2%; wherein the inevitable impurities comprise P ≤ 0.04%, and S ≤ 0.05%.

It should be noted that, in order to describe the present invention more clearly, "upper surface" and "lower surface" (or "upper side" and "lower side") are used to distinguish the two surfaces (or sides) of the substrate or the steel strip in the thickness direction. Specifically, herein, the surface or side having a phosphatization layer and a stearate lubricant layer is referred to as "upper surface" or "upper side", and the surface or side having a stearate lubricant layer only is referred to as "lower surface" or "lower side". However, such description is not intended to unduly limit the present invention, because those skilled in the art understand that the terms "upper" and "lower" are relative descriptions that change depending on the orientation of the product.

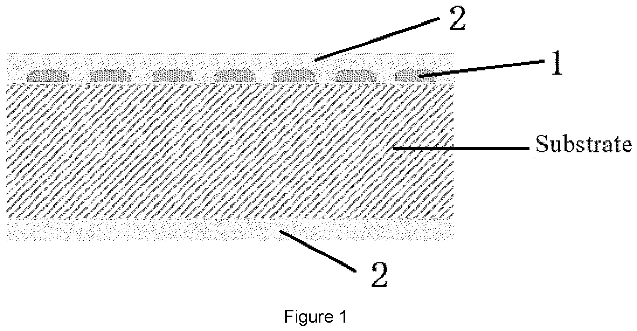

Herein, when describing the relative positions of the phosphatization layer and the stearate lubricant layer on the upper surface of the substrate, "from inside to outside" refers to a direction from the side close to the substrate to the side away from the substrate. For example, in figure 1, "from inside to outside" refers to a direction from bottom to top.

Preferably, the substrate contains the following chemical elements in wt %: C: 0.1-0.7%, 0.2% ≤ Si ≤ 2%, 0.2% ≤ Mn ≤ 2%, Cr: 0.2-1.4%, 0.01% ≤ Al ≤ 0.06%, Mo: 0.05-0.2%, and the balance being Fe and inevitable impurities; wherein the inevitable impurities comprise P ≤ 0.04%, S ≤ 0.05%.

In the substrate of steel strip according to the present invention, the design principles of each element content are as follows:
C: if the element C content is less than 0.1%, the strength is insufficient. If the element C content is more than 0.7%, the surface chemical reactivity of the material will be reduced, thereby affecting the surface phosphating and passivation film formation, and the forming stability of the material may be insufficient. Therefore, the content of the element C is controlled to be in the range of 0.1% to 0.7%.
Si: the element Si can effectively improve the formability (mouldability) of the material under high-strength conditions. However, if the content of Si is too high (> 2%), it will be selectively oxidized and precipitated during heat treatment, and the precipitates will be enriched on the surface, thereby affecting the subsequent phosphating and passivation film-forming reaction performances. Therefore, the content of the element Si is controlled to be in the range of 0.2% to 2%.
Mn: The element Mn can play a role of ensuring the strength and hardness of the material. However, if the Mn content is too high (> 2%), it will also be selectively oxidized and precipitated during the heat treatment process, and the precipitates will be enriched on the surface, thereby affecting the subsequent phosphating and passivation film-forming reaction performances. Therefore, the content of the element Mn is controlled to be in the range of 0.2% to 2%.
Cr, Al, and Mo: These elements mainly have the function of refining the crystalline. If the contents are too low, the above effects cannot be fully realized. Excessive addition is not economical for product manufacturing. Therefore, the contents of the elements Cr, Al and Mo are controlled to be in the ranges of 0.2% to 1.4%, 0.01% to 0.06%, and 0.05% to 0.2%, respectively.

Inevitable impurities include elements P and S. If the contents of P and S are too high, it will affect the toughness of the material and cannot meet the requirement of formability under large deformation. Therefore, the contents of impurity elements P and S are controlled to not exceed 0.04% and not exceed 0.05%, respectively.

Preferably, the substrate has a thickness of 1.0 to 6.0 mm. Herein, the "thickness of the substrate" does not include the thickness of one phosphatization layer and two stearate lubricant layers on the upper and lower surfaces of the substrate. If the thickness of the substrate is less than 1 mm, the shell wall of the part is likely to be too thin to meet the bearing performance requirements after large deformation and deep drawing. If the thickness of the substrate is greater than 6 mm, the production line for manufacturing the cold-rolled product cannot realize effective manufacturing. With the thickness of the substrate of 1.0 to 6.0 mm, the steel strip according to the present invention is suitable for processing shell parts having high precision and large deformation.

Preferably, the phosphatization layer has a the grain size (i.e., the maximum length of the grain) of 8 to 20 µm. In said phosphatization layer, the crystal grains are elongated, and the grain size thereof is measured according to the standard GBIT 38933-2020.

Preferably, the phosphatization layer (i.e., phosphating film) has a weight of 1 to 3 g/m², measured according to the standard GBIT 38933-2020.

With the grain size in the phosphatization layer of 8 to 20 µm and/or the weight of the phosphatization layer of 1 to 3 g/m², on the one hand, it can better provide a three-dimensional space for the subsequent stearate film-forming, thereby effectively increasing the storage capacity of the stearate lubricant on the product surface. On the other hand, it can better ensure the uniform distribution of the lubricant during the deformation process, and provide further lubrication by utilizing its good friction lubrication characteristics. The phosphatization layer according to the present invention is a non-dense phosphating film having coarse crystals, effectively reducing the amount of wear debris during the stamping process, thereby extending the life of the die.

The upper surface of the steel strip according to the present invention includes a phosphatization layer and a stearate lubricant layer in sequence from inside to outside, i.e., the upper surface is designed with a structural of a phosphatization layer and a stearate coating. Both the phosphated film and the stearate saponification film have lubricating functions, and their combination can effectively improve the lubrication stability during the stretching deformation process. The upper surface has a surface roughness Rₐ of 0.6 to 1.8 µm and a surface roughness R_{z} of 6 to 16 µm, which can ensure that the surface of the steel strip has good surface lubrication during the extension process.

The lower surface of the steel strip according to the present invention is a stearate lubrication layer. Stearate is a processing lubricant that provides both internal and external lubrication. It has good thermal stability and excellent demolding performance (preventing adhesion and accumulation on the mold surface) during continuous rapid stamping process, avoiding abnormal abrasive particle contamination on the inner surface of the formed part. It ensures the surface's lubrication and high surface cleanliness. The lower surface has a surface roughness Rₐ of 0.3 µm or less and a surface roughness R_{z} of 2 µm or less.

The upper and lower surfaces of the steel strip according to the present invention have a structural design with differentiated functions, which can provide personalized functional requirements during the forming and stamping process demanding high efficiency and high precision.

The surface of the steel strip according to the present invention being in contact with the female die during the forming process is a phosphatization layer and a stearate lubrication layer. The surface has good surface lubrication performance during the extension process. The surface has a surface roughness Rₐ: 0.6-1.8 µm and a surface roughness R_{z}: 6-16 µm. When the surface roughness of the steel strip surface being in contact with the female die is too low, i.e., Rₐ < 0.6 µm or R_{z} < 6 µm, the surface lubrication components will lost rapidly during the deformation and extension process, leading to insufficient lubrication performance and material surface scratching, thus damaging the die. When the surface roughness is too high, i.e., Rₐ > 1.8 µm or R_{z} > 16 µm, the lubrication during the deformation and extension process is sufficient, but excessive wear debris will be generated during continuous stamping, thereby affecting the life of the die.

The surface of the steel strip according to the present invention being in contact with the male die during the forming process is a stearate lubrication layer. The surface has good lubrication and high surface cleanliness. The surface has a surface roughness Rₐ ≤ 0.3 µm and a surface roughness R_{z} ≤ 2 µm. The surface of the strip steel being in contact with the male die is an inner surface of the formed part. A smoother surface design can meet the high dimensional accuracy requirements of the formed part. At the same time, the surface is in close contact with the die throughout the forming process. Appropriate surface lubrication components will fully exert lubrication during formingprocess. When the surface roughness of the steel strip surface being in contact with the male die is too high, i.e., Rₐ > 0.3 µm or R_{z} > 2 µm, the risk that the dimensional accuracy and smoothness of the inner surface of the formed part are poor will be increased.

The upper and lower surfaces of the steel strip according to the present invention adopt a differentiated functional design, wherein the surface of the steel strip being in contact with the male die has good lubrication and high surface cleanliness, and the surface of the steel strip being in contact with the female die has good surface lubrication performance during extension. According to the present invention, the requirements of continuous and efficient stamping process during the processing of shell parts having high precision and large deformation can be met, and operations such as film coating, or oil coating during a stamping process of manufacturing the shell parts having high precision and large deformation by using the traditional steel plate can be omitted. The obtained product can be packaged as it is and then shipped, eliminating the need for cleaning after forming, significantly improving manufacturing efficiency.

At the same time, both the upper and lower surfaces of the steel strip have stearate. After the stearate is formed into a film, it has an excellent corrosion medium barrier function at room temperature, which can effectively improve the rust resistance and corrosion resistance of the steel strip surface. The parts produced with the steel strip do not need additional rust-preventive oil coating.

In another aspect, the present invention provides a method for manufacturing a steel strip (such as the steel strip as described above), comprising the the following steps:
1) degreasing:
   feeding a rolled steel into a degreasing tank containing an alkaline degreasing agent through a tension roller, and degreasing the steel at a degreasing temperature of 30 to 60°C; oil stains on the surface of the steel can be cleaned by using the alkaline degreasing agent;
2) first rinsing:
   rinsing the surfaces of the degreased steel with rinsing water, wherein the rinsing water is industrial pure water having a conductivity of ≤ 10 µS/cm, or the rinsing water is a mixture of tap water with 0.2-1.1 wt% of a corrosion inhibitor;
3) activation and passivation:
   spraying a surface conditioning agent on the upper surface of the rinsed steel to activate it, with a spraying pressure of 0.4 to 1.2 bar and a spraying direction which forms an included angle of 90 to 135° with the direction of movement of the steel; and coating a passivating treatment agent having phosphating and barrier functions on the lower surface of the steel to passivate it;
4) phosphating:
   subjecting the upper surface of the activated steel to a phosphating treatment by high-pressure spraying of a phosphating agent, wherein the phosphating treatment is carried out for a time of 6 to 12 seconds, at a spraying pressure of 5 to 8 bar, and at a spraying direction which forms an included angle of 90 to 135° with the direction of movement of the steel;
5) second rinsing:
   rinsing the surfaces of the steel with industrial pure water having a conductivity of ≤ 10 µS/cm, and then subjecting the surfaces of the steel to a squeezing dry treatment surfaces after the rinsing;
6) saponification:
   applying a stearate treatment agent on the upper surface and the lower surface of the steel at a temperature of 70 to 90°C, and then treating the surfaces of the steel with purging by compressed air and with a wiping roller.

Preferably, in step 2), the surfaces of the steel are rinsed by spraying, and the spraying pressure is 2 to 4 bar.

Preferably, in step 2), the corrosion inhibitor is selected from one or more of sodium phosphate, sodium nitrite, sodium benzoate, and sodium silicate.

Preferably, in step 3), the surface conditioning agent is selected from colloidal titanium salt-based surface conditioning agent, such as PL-Z commercially available from Parkerizing or the like.

Preferably, in step 3), the passivating treatment agent having phosphating and barrier functions is a zirconate-based passivating treatment agent or a chromate-based passivating treatment agent.

Preferably, in step 4), the phosphating agent is selected from a phosphating solution of zinc-manganese-nickel ternary system, such as PB-181 commercially available from Parkerizing or the like.

Preferably, in step 4), the spraying angle is 100 to 120° relative to the direction of movement of the steel.

Preferably, in step 5), the surfaces of the steel are rinsed by spraying, the spraying pressure is 1 to 4 bar, and the spraying angle is 90 to 120° relative to the direction of movement of the steel.

Preferably, in step 6), the stearate treatment agent is applied by spraying.

Preferably, in step 6), the stearates contained in the stearate treatment agent are C18 or C16 stearates.

Preferably, in step 6), the stearate treatment agent comprises one or more of sodium stearate, magnesium stearate, and zinc stearate.

Preferably, in step 3) and/or step 4), in the width direction of the steel, movable baffles are provided at a distance of 2 to 6 cm, preferably 3 to 5 cm from the edges of both sides of the steel, respectively. In other words, the movable baffle is approximately on the same plane as the steel material, and is perpendicular to the length direction (i.e., direction of movement) of the steel, and the gap between the movable baffle and the edge of the steel is 2 to 6 cm, preferably 3 to 5 cm.

Preferably, in step 3) and/or step 4), the steel moves at a speed of 40 to 80 m/min.

In the manufacturing method according to the present invention:
The main purpose of degreasing is to effectively clean the surfaces of the steel. The temperature of the degreasing agent is controlled within 30 to 60°C. If the temperature is too low (< 30°C), the cleaning capability significantly decreases, making it difficult to ensure surface cleanliness, or requiring a large amount of cleaning additives, which is not environmentally friendly. If the temperature is too high (> 60°C), the energy consumption is too high to meet lowcarbon production requirements.

The residual degreasing agent on the surfaces of the steel is washed away and removed by the first rinsing, confirming the cleaning effect by a continuous state of the surface water film. Rust issues can easily arise during the first rinsing process, which can be effectively avoided mainly by the quality of rinsing water and a corrosion inhibition techniques. The corrosion process of metal materials in water is mainly electrochemical reactions, and the conductivity of water directly affects the difficulty of the rusting reaction. The conductivity of water is affected by the number of ionic impurities, and it is mainly characterized by conductivity. Freshly degreased metal surfaces are prone to rust. The rinsing process uses industrial pure water having a conductivity of ≤ 10 µS/cm, which can effectively control rust issues.

Tap water with 0.2 to 1.1 wt% of corrosion inhibitor can effectively reduce the risk of surface rust during the washing process while thoroughly cleaning the surface. When the addition amount of the corrosion inhibitor is too low (i.e., < 0.2 wt%), the corrosion inhibiting effects cannot be achieved. When the amount is too high (i.e., > 1.1 wt%), it is not economically and environmentally favorable. The corrosion inhibitor added is selected from one or more of sodium phosphate, sodium nitrite, sodium benzoate, and sodium silicate.

Activation & passivation: On the one hand, the surface conditioning agent is sprayed on the upper surface of the steel to form a surface conditioning activation layer that promotes the homogeneous nucleation of phosphating. On the other hand, a passivation treatment agent having a phosphating and barrier function is applied on the lower surface of the steel material to form a rust-resistant passivation layer having a phosphating and barrier function. In the process of activation & passivation, it is necessary to effectively control the mutual interference in the the upper and lower surfaces treatment process. Preferably, during the process of spraying the surface conditioning agent, the spraying pressure is controlled within 0.4 to 1.2 bar. When the pressure is too low (less than 0.4 bar), the spraying amount of the surface conditioning agent is insufficient so that the activation is insufficient. When the spraying pressure is too high (greater than 1.2 bar), it will also affect the adsorption amount of the surface conditioning agent, resulting in that the phosphating treatment of the product is insufficient. In the case where the spraying angle is 90 to 135°, preferably 100 to 120°, relative to the direction of movement of the steel, the influence of the surface conditioning agent on the lower surface can be better avoided.

The application method of the passivating treatment agent having phosphating and barrier function on the surface of the steel material can use spraying, roller coating, brushing and the like. When applied by spraying, the spray angle relative to the direction of movement of the steel should be controlled to reduce mutual interference of the treatment agents on the upper and lower surfaces due to spray splashing.

In order to avoid the interference between the two surfaces during the spraying process, it is preferable that movable baffles are provided at a distance of 2 to 6 cm from each side edge of the steel. The main purpose is to avoid the mutual contamination of the surface treatment agents during the spraying process. If the gap between the steel and the movable baffle is too large (> 6 cm), different treatment agents on the upper and lower surfaces will significantly affect each other during the spraying process. If the gap between the steel and the movable baffle is too small (< 2 cm), there is a greater risk that the edges of the steel will collide with each other during normal production. The gap between the steel and the movable baffle is preferably 3 to 5 cm.

The main purpose of phosphating is to quickly form evenly distributed phosphating crystal particles on one side of the steel so that a film can be rapidly, uniformly, and non-densely formed (see Figure 1). By spraying the phosphating agent under high pressure, a phosphating film is formed within 6 to 12 seconds, which is a non-dense phosphating film composed of elongated plate-like phosphating crystalline particles, with particle lengths ranging from 8 to 20 µm and a phosphating film weight (i.e., the weight of the phosphatization layer) of 1 to 3 g/m². On the one hand, the phosphating film layer can better spatial capacity for subsequent formation of the stearate film, thereby effectively increasing the storage amount of the stearate lubricant on the product surface. On the other hand, the phosphating film layer can better ensure the uniform distribution of the lubricant during the deformation process, and can use its own good friction and lubrication properties to provide further lubrication function. The design of non-dense phosphating film with coarse crystals can effectively reduce the amount of wear debris during the stamping process, thereby extending the die life.

The time of the conventional continuous phosphating treatment of the steel is generally 15 seconds or more. In the present invention, the effective surface phosphating treatment can be performed within 6 to 12 seconds by using high-pressure spraying and controlling the spraying pressure to be within 4 to 10 bar, and thus the phosphating efficiency can be greatly improved. When the spraying pressure is too low (< 4 bar), the phosphating efficiency in the continuous manufacturing process does not meet the requirements of the fast (6 to 12 seconds) phosphating treatment, and the size of the phosphating crystal produced is small (particle length < 8 µm), failing to meet the surface requirement of the continuously produced steel products. When the spraying pressure is too high (> 10 bar), excessive splashing occurs, easily affecting the lower surface, and adversely impacting the stability of the phosphating effect and the uniform distribution of phosphating crystals. The spraying direction is at an angle of 90 to 135°, preferably 100 to 120°, relative to the direction of movement of the steel.

The second rinsing: the main purpose thereof is to effectively clean the phosphating treatment agent remaining on the surface. The risk of rust in this process is significantly reduced due to the effects of The phosphating film and the passivation film on the surface of the steel, eliminating the need for special rust prevention control. Both surfaces of the steel are rinsed with industrial pure water having a conductivity of ≤10 µS/cm. The temperature of the rinsing water is room temperature, and the spraying pressure is 1 to 4 bar. The spraying direction forms an angle of 90 to 120° with the direction of movement of the steel. If tap water having high conductivity is used as it is, electrolytes residuals will be left on the surface, which will be directly covered under the stearate lubricant film in the subsequent process, and thus affect the rust resistance of the product during storage and transportation. Squeezing dry the surfaces (for example, by using squeezing rolls or a squeezingmachine) after rinsing, the amount of water on the surface can be effectively reduced.

Stearate treatment (saponification treatment): Stearate liquid at 70 to 90°C is applied to the surface of the steel by spraying, and the film layer on the surface is treated to be uniform by using a wiping roller. Preferably, the stearates are C18 or C16 stearates. Preferably, the stearate treatment agent is formulated from one or more of sodium stearate, magnesium stearate, and zinc stearate. After the liquid stearate is sprayed onto the surface of the steel, it is blown by compressed air, and a wiping roller ensures an even treatment of the surface film.

After the above-mentioned steps are completed, the steel is coiled by a coiling machine and then packaged for delivery. The steel coils manufactured by the method as described above exhibit excellent rust resistance and corrosion resistance, so it require no additional anti-rust oil-coating during storage and transportation.

The beneficial effects of the present invention are:
1. According to the present invention, a steel strip whose the two surfaces have differentiated functions can be obtained, wherein the surface having a stearate lubricant layer only has good lubricity and high surface cleanliness, and the surface having a phosphatization layer and a stearate lubricant layer has good surface lubricity during extension process,. This meets the requirements of the continuous and efficient stamping process during the process of the shell parts having high precision and large deformation. However, in the case of using the traditional steel plate, it is necessary to perform film coating and oil coating during a stamping process of manufacturing the shell parts having high precision and large deformation, and the parts need to be cleaned after it is processed into the parts. On the contrary, in the case of using the steel strip according to the present invention, shell parts having high precision and large deformation can be directly stamped and processed, and compared with the the conventional steel plate, operations such as film coating, oil coating, or cleaning after the forming can be omitted, and the obtained parts can be directly packaged and delivered, so that the efficiency of parts manufacturing can be greatly improved. Moreover, the stearate is applied on both surfaces of the steel strip. After the stearate is formed into a film, the rust resistance and corrosion resistance on the surface of the steel strip can be effectively improved, and the steel strip does not need to be coated with anti-rust oil during storage and transportation.
2. In the manufacturing method provided by the present invention, after the substrate is degreased and rinsed, the two surfaces of the substrate are activated and passivated, respectively, and the parameters in the process are controlled to prevent the interference during the treatment of the two surfaces, and a single-sided phosphating spraying process combined with a double-sided saponification process is used to realize the continuous manufacturing of the steel strip having differentiated functions on the two surfaces.
3. The present invention's high-pressure spray phosphating process significantly reduces effective treatment time under appropriate equipment length conditions. The overall running speed of the steel strip can be controlled within 40 to 80 m/min, and the requirement of the highly efficient manufacturing of the conventional steel strip can be met, so that the method can be directly connected to the existing continuous annealing and leveling processes of cold-rolled steel strip, and can also be used as a independent surface treatment manner to realize continuous manufacturing of the steel strip having differentiated functions on the two surfaces.

### BRIEF DESCRIPTION OF THE DRAWINGS

Figure 1 is a schematic structure diagram of a steel strip according to the present invention.

### DETAILED DESCRIPTION OF THE EMBODIMENTS

Hereinafter, the present invention will be specifically described based on figures, Examples, and Comparative Examples. However, the present invention is not limited to the following examples.

Referring to figure 1, which shows the structure of the steel strip provided by an embodiment of the present invention. The surface A of the substrate sequentially comprises, from inside to outside, a phosphatization layer 1 and a stearate lubricant layer 2, and the surface B of the substrate is a stearate lubricant layer 2.

The substrate composition of Examples and Comparative Examples of the present invention referred to Table 1, wherein the balance is Fe and inevitable impurities other than P and S. The manufacturing process parameters in Examples and Comparative Examples in the present invention are shown in Table 2. The evaluation results of the implementation effects of the processes in Examples and Comparative Examples in the present invention are shown in Table 3.

Two kinds of surface roughness parameters Ra ("an arithmetic mean deviation") and Rz ("a ten-point height of micro-irregularities") of the steel strip are measured by using the Mahr MARSURF PS 10 Mobile roughness measuring instrument from Mahr in Germany (The measurement is performed with reference to the standard GBIT 1031).

The implementation effects of the process according to the present invention were evaluated according to the following evaluation criteria.

### (1) Process -- Evaluation of Degreasing Effect

The degreasing and cleaning effects on the surface of the steel strip were evaluated by the continuous state of the water film on the surface during the water washing process after degreasing. The state of the water film on the washed surface after degreasing was observed visually:
⊚: The water film on the surface is uniform and continuous, with a coverage rate of 100%;
×: The water film on the surface was obviously discontinuous, with a coverage rate of less than 100%.

### (2) Process -- Rust Phenomenon after Rinsing 1

The rust condition on the surfaces of the steel strip before activation & passivation and after the first rinsing was observed visually:
⊚: The surfaces had no rust, and the rust/ area was 0%;
×: There was/were rust spot(s) on the surface, and the rust area was greater than 0%.

### (3) Process -- Phosphating Effect

A sample was taken after phosphating. The size of the phosphated crystals on the upper surface of the phosphated steel strip was observed by SEM:
⊚: The size of the phosphated crystals on the upper surface was 8 to 20 µm, and the crystals were evenly distributed; 1 g/m² ≤ the weight of the phosphated film ≤ 3 g/m²;
o: The size of the phosphated crystals on the upper surface was 8 to 20 µm, however, the crystals were partially unevenly distributed, 1 g/m² ≤ the weight of the phosphated film ≤ 3 g/m²;
△: The size of the phosphated crystals on the upper surface was < 8 µm or > 20 µm; the weight of the phosphated film was < 1 g/m² or > 3 g/m²;
×: No significant phosphating crystals on the upper surface.

### (4) Process -- Cleaning Effect

A sample was taken after phosphating. The lower surface of the steel strip without phosphating treatment was observed by SEM:
⊚: No phosphated crystal was observed;
∘: Slight phosphorization was observed in the local areas, but no significant phosphating crystal was observed;
△: Slight phosphating crystals were observed on the surface;
×: significant phosphating crystals were observed on the surface.

As shown in table 3, Examples 1-6 were processed according to the processes as described in the present invention, and all the process effects of the obtained steel strip were excellent. The lower surface of the steel strip was a stearate lubricant layer, and had a surface roughness Rₐ of 0.3 µm or less and a surface roughness R_{z} of 2 µm or less, and thus the lower surface had good lubricity and high surface cleanliness; The upper surface of the steel strip sequentially comprised, from inside to outside, a phosphatization layer and a stearate lubricant layer, and the upper surface thereof had a surface roughness Rₐ in the range of 0.6 to 1.8 µm and a surface roughness R_{z} in the range of 6 to 16 µm, and thus the upper surfact had good surface lubricity during extension process.

In Comparative Example 1, the lack of a phosphating and barrier treatment resulted in significant phosphating crystals forming on the lower surface due to partial phosphating effects. In Comparative Example 2, the degreasing temperature near room temperature failed to achieve effective surface cleaning, and the short phosphating time combined with low spray pressure resulted in no significant phosphating crystals on the upper surface. In Comparative Example 3, the use of high-conductivity tap water for rinsing water 1 caused obvious rust during the water washing process after degreasing, adversely affecting subsequent phosphating.

Regarding the strip steel obtained in Example of the present invention, the surface of the steel strip was subjected to the neutral salt spray test according to the standard ASTM B117. No rust was observed on the surface of the steel strip in 24 hours. The corrosion resistance of the strip steel was obviously better than conventional oil-coated steel plate (which exhibit rust after about 12 hours in a neutral salt spray test). This indicates that the steel strip obtained by the present invention has good rust resistance and corrosion resistance, meeting the corrosion resistance requirement for 4 months of storage and transportation without surface rust.

**Table 1**

| No. | C | Si | Mn | Cr | Al | Mo | P | S |
|---|---|---|---|---|---|---|---|---|
| Example 1 | 0.1 | 0.2 | 1.22 | 1.02 | 0.04 | 0.05 | 0.02 | 0.015 |
| Example 2 | 0.5 | 1.2 | 0.8 | 0.23 | 0.06 | 0.11 | 0.04 | 0.04 |
| Example 3 | 0.2 | 0.8 | 1.7 | 0.61 | 0.01 | 0.15 | 0.02 | 0.01 |
| Example 4 | 0.7 | 1.8 | 0.2 | 1.4 | 0.05 | 0.20 | 0.03 | 0.05 |
| Example 5 | 0.3 | 2.0 | 0.3 | 0.82 | 0.03 | 0.08 | 0.015 | 0.03 |
| Example 6 | 0.4 | 1.0 | 2.0 | 0.74 | 0.02 | 0.06 | 0.02 | 0.022 |
| Comparative Example 1 | 0.4 | 1.1 | 0.9 | 1.3 | 0.03 | 0.06 | 0.03 | 0.02 |
| Comparative Example 2 | 0.1 | 0.2 | 1.22 | 1.02 | 0.04 | 0.05 | 0.02 | 0.015 |
| Comparative Example 3 | 0.3 | 2.0 | 0.3 | 0.82 | 0.03 | 0.08 | 0.015 | 0.03 |

**Table 2**

| No. | Degreasing | First Rinsing | Activation and Passivation | | | Phosphating | | | Second Rinsing | Saponification |
|---|---|---|---|---|---|---|---|---|---|---|
| | | | Activation of Surface Conditioning Agent | | Passivation | | | | | |
| | Degreasing Temperature [°C] | Rinsing Water | Spray Pressure [bar] | Spray Angle [°] | Application Means | Phosphating Time [s] | Spray Pressure [bar] | Spray Angle [°] | Conductivity [µS/cm] | Application Temperature [°C] |
| Example 1 | 50 | Industrial pure water with conductivity of 4 µS/cm | 1.2 | 90 | Spraying | 6 | 5.5 | 110 | 4 | 85 |
| Example 2 | 30 | Tap water + 0.6 wt% sodium nitrite | 1.0 | 100 | Roller Coating | 7 | 6 | 135 | 6 | 90 |
| Example 3 | 40 | Tap water + 0.4 wt% sodium phosphate | 0.8 | 110 | Brush Coating | 12 | 5.0 | 120 | 2 | 70 |
| Example 4 | 45 | Industrial pure water with conductivity of 10 µS/cm | 0.4 | 115 | Spraying | 8 | 7 | 130 | 8 | 88 |
| Example 5 | 60 | Tap water + 1.0 wt% sodium benzoate | 0.6 | 125 | Roller Coating | 10 | 8 | 100 | 5 | 75 |
| Example 6 | 35 | Industrial pure water with conductivity of 10 µS/cm | 0.7 | 135 | Spraying | 9 | 7.5 | 90 | 10 | 80 |
| Comparative Example 1 | 50 | Industrial pure water with conductivity of 10 µS/cm | 0.4 | 115 | None | 8 | ***15*** | 135 | 8 | 90 |
| Comparative Example 2 | ***25*** | Tap water + 0.4 wt% sodium silicate | 0.6 | 135 | Roller Coating | 5 | ***2*** | 100 | 10 | 70 |
| Comparative Example 3 | 45 | ***Tap water with conductivity of 200* *µS*/*cm*** | 0.6 | 135 | Spraying | 6 | ***9*** | 90 | 10 | 70 |

**Table 3**

| No. | Degreasing Effect | Rust after First Rinsing | Phosphating Effect | Cleaning Effect | Surface Roughness of the Upper Surface of Steel Strip | | Surface Roughness of Lower Surface of Steel Strip | |
|---|---|---|---|---|---|---|---|---|
| | | | | | *Rₐ* [µm] | *R_{z}* [µm] | *Rₐ* [µm] | *R_{z}* [µm] |
| Example 1 | ⊚ | ⊚ | ⊚ | ⊚ | 0.81 | 7.8 | 0.19 | 1.0 |
| Example 2 | ⊚ | ⊚ | ⊚ | ⊚ | 0.9 | 8.1 | 0.18 | 0.9 |
| Example 3 | ⊚ | ⊚ | ⊚ | ⊚ | 1.52 | 14.1 | 0.21 | 1.5 |
| Example 4 | ⊚ | ⊚ | ⊚ | ⊚ | 0.92 | 8.7 | 0.16 | 0.8 |
| Example 5 | ⊚ | ⊚ | ⊚ | ⊚ | 1.1 | 12.4 | 0.18 | 1.1 |
| Example 6 | ⊚ | ⊚ | ⊚ | ⊚ | 0.7 | 10.3 | 0.29 | 2 |
| Comparative Example 1 | ⊚ | ⊚ | ⊚ | × | ***0.55*** | 6.8 | ***0.63*** | ***8.2*** |
| Comparative Example 2 | × | ⊚ | × | ⊚ | ***0.41*** | ***5.2*** | 0.20 | 1.4 |
| Comparative Example 3 | ⊚ | × | Δ | Δ | 1.5 | ***22.1*** | ***0.47*** | ***9.1*** |

## Claims

1. A steel strip, wherein the steel strip comprises a substrate as well as a phosphatization layer and a stearate lubricant layer disposed on the substrate; and
in the thickness direction of the substrate, the phosphatization layer and the stearate lubricant layer are sequentially arranged on the upper surface of the substrate from inside to outside, and the stearate lubricant layer is arranged on the lower surface of the substrate; and
the upper surface of the steel strip has a surface roughness Rₐ of 0.6 to 1.8 µm and a surface roughness R_{z} of 6 to 16 µm; and
the lower surface of the steel strip has a surface roughness Rₐ of 0.3 µm or less and a surface roughness R_{z} of 2 µm or less.

2. The steel strip according to claim 1, wherein in addition to Fe and inevitable impurities, the substrate further contains the following chemical elements in wt %: C: 0.1-0.7%, 0.2% ≤ Si ≤ 2%, 0.2% ≤ Mn ≤ 2%, Cr: 0.2-1.4%, 0.01% ≤ Al ≤ 0.06%, and Mo: 0.05-0.2%; wherein the inevitable impurities comprise P ≤ 0.04% and S ≤ 0.05%.

3. The steel strip according to claim 1 or 2, wherein the substrate contains the following chemical elements in wt %: C: 0.1-0.7%, 0.2% ≤ Si ≤ 2%, 0.2% ≤ Mn ≤ 2%, Cr: 0.2-1.4%, 0.01 % ≤ Al ≤ 0.06%, Mo: 0.05-0.2%, and the balance being Fe and inevitable impurities; wherein the inevitable impurities comprise P ≤ 0.04% and S ≤ 0.05%.

4. The steel strip according to any one of claims 1 to 3, wherein the substrate has a thickness of 1.0 to 6.0 mm; preferably, in the phosphatization layer has a grain size of 8 to 20 µm, and/or the phosphatization layer has a a weight of 1 to 3 g/m².

5. A method for manufacturing the steel strip according to any one of claims 1 to 4, comprising the following steps:
1) degreasing:
feeding a rolled steel into a degreasing tank containing an alkaline degreasing agent through a tension roller, and degreasing the steel at a degreasing temperature of 30 to 60°C;
2) first rinsing:
rinsing the surfaces of the degreased steel with rinsing water, which is industrial pure water having a conductivity of ≤ 10 µS/cm, or a mixture of tap water with 0.2-1.1 wt% of a corrosion inhibitor;
3) activation and passivation:
spraying a surface conditioning agent on the upper surface of the rinsed steel to activate it, with a spraying pressure of 0.4 to 1.2 bar and a spraying direction which forms an included angle of 90 to 135° with the direction of movement of the steel; and coating a passivating treatment agent having phosphating and barrier functions on the lower surface of the steel to passivate it;
4) phosphating:
subjecting the upper surface of the activated steel to a phosphating treatment by high-pressure spraying of a phosphating agent, wherein the phosphating treatment is carred out for a time of 6 to 12 seconds, at a spraying pressure of 5 to 8 bar, and at a spraying direction which forms an included angle of 90 to 135°, preferably 100 to 120°, with the direction of movement of the steel;
5) second rinsing:
rinsing the surfaces of the steel with industrial pure water having a conductivity of ≤10 µS/cm, and then subjecting the surfaces of the steel to a squeezing dry treatment after the rinsing;
6) saponification:
applying a stearate treatment agent on the upper surface and the lower surface of the steel at a temperature of 70 to 90°C, and then treating the surfaces of the steel with purging by compressed air and with a wiping roller.

6. The method according to claim 5, wherein in step 2), the surfaces of the steel are rinsed by spraying at a spraying pressure of 2 to 4 bar.

7. The method according to claim 5, wherein in step 2), the corrosion inhibitor is selected from one or more of sodium phosphate, sodium nitrite, sodium benzoate, and sodium silicate.

8. The method according to claim 5, wherein in step 3), the passivating treatment agent is a zirconate-based passivating treatment agent or a chromate-based passivating treatment agent; preferably, the passivating treatment agent is applied by one or more of spraying, roller coating, and brush coating.

9. The method according to claim 5, wherein in step 5), the surfaces of the steel are rinsed by spraying at a spraying pressure of 1 to 4 bar, and at a spraying angle of 90 to 120° relative to the direction of movement of the steel.

10. The method according to claim 5, wherein in step 6), the stearate treatment agent is applied by spraying.

11. The method according to claim 5, wherein in step 6), the stearates contained in the stearate treatment agent are C18 or C16 stearates; preferably, the stearate treatment agent comprises one or more of sodium stearate, magnesium stearate, and zinc stearate.

12. The method according to claim 5, wherein in step 3) and/or step 4), in the width direction of the steel, movable baffles are provided at a distance of 2 to 6 cm, preferably 3 to 5 cm, from the edges of both sides of the steel, respectively.

13. The method according to claim 5, wherein in step 3) and/or step 4), the steel moves at a speed of 40 to 80 m/min.
